# EUROPÄISCHE PATENTANMELDUNG

(11) **EP 1 308 557 A1**
(43) Veröffentlichungstag der Anmeldung: **07.05.2003**
(21) Anmeldenummer: 02024110.5
(22) Anmeldetag: 29.10.2002
(51) Int. Cl.: D21H 17/29, D21H 19/54

(54) **Wässrige Suspension enthaltend modifizierte Stärke, Streichmasse enthaltend diese und deren Verwendung zur Papierverarbeitung**

(30) Priorität: 30.10.2001 DE 10153565
(71) Anmelder: CTP Papierhilfsmittel GmbH & Co. KG, 86830 Schwabmünchen (DE)
(72) Erfinder: Baumeister, Manfred, Dr., 86399 Bobingen (DE)
(74) Vertreter: Ackermann, Joachim, Dr.

(57) **Zusammenfassung**

Die vorliegende Anmeldung betrifft wässrige Suspensionen enthaltend kationisch oberflächenmodifizierte, feinteilige und unverkleisterte Stärken mit einem mittleren Korndurchmesser von 5 bis 50 µm. Diese eignen sich zur Behandlung von Papieren, die sich besonders für das Ink-Jet-Druckverfahren einsetzen lassen, aber auch zur Behandlung von Papieren, die als sogenannte Mehrzweckbüropapiere für Ink-Jetund Laser-Druckverfahren geeignet sind.

## Beschreibung

Wässrige Suspension enthaltend modifizierte Stärke, Streichmasse enthaltend diese und deren Verwendung zur Papierverarbeitung

Die vorliegende Anmeldung betrifft oberflächen-modifizierte Stärken, deren Verwendung zur Verarbeitung von Papieren, die sich besonders für das Ink-Jet-Druckverfahren eignen, aber auch für Papiere, die als sogenannte Mehrzweckbüropapiere für Ink-Jet- und Laser-Druckverfahren geeignet sind, sowie Streichmittel zur Oberflächenbehandlung derartiger Papiere und die so hergestellten Papiere.

Die erfindungsgemäß oberflächenbehandelten Papiere sollen bei Anwendung des Ink-Jet-Druckverfahrens zu einer hohen Farbdichte führen, gleichzeitig soll das Druckbild aber auch eine hohe Trennschärfe aufweisen. Um diese beiden entgegenstehenden Forderungen zu erfüllen, müssen die aufgetragenen Farbpigmente der Tinte möglichst vollständig an der Papieroberfläche verbleiben, während das mit aufgebrachte Lösungsmittel in das Papiervolumen eindringen soll, um dann wegzutrocknen.

Preiswerte Bürokopierpapiere erhalten einen Auftrag aus enzymatisch abgebauter Mais- oder Kartoffelstärke unter Zugabe eines Leimungsmittels zur Teilhydrophobierung. Die so erhaltene verbesserte Trennschärfe genügt für Ink-Jet- und auch für Laser-Drucker zur Wiedergabe von Schriftbildern und einfachen Grafiken, eine Darstellung von Bilder und speziell von Fotos ist aufgrund der geringen zu erzielenden Farbdichte nicht zufriedenstellend.

Nach dem Stand der Technik werden zur Herstellung von hochwertigen, matten Ink-Jet-Papieren Pigmente mit sehr hoher BET-Oberfläche bis 700 g/m², die mit Geloder Fällungsverfahren hergestellt worden sind, mit hydrophilen Bindemitteln, kationischen Bindemitteln und kationischen Fixiermitteln für gelöste bzw. Pigmentfarbstoffe kombiniert. Als Bindemittel werden meistens mittelmolekulare, teilverseifte Polyvinylalkohole im Viskositätsbereich 26 bis 40 mpa.s, welche silanmodifiziert sein können, eingesetzt.

Als Dispersionsbinder werden homopolymere Polyvinylacetate, bzw. Copolymere mit Acrylaten verwendet. Um ein möglichst hohes Pigmentleervolumen zu erreichen, sollte ein möglichst geringer Bindemittelanteil eingesetzt werden. Die beschriebenen, filmbildenden Bindemittel auf Lösungs- bzw. Emulsionspolymerbasis ergeben entsprechend der eingesetzten Menge eine Verminderung des Pigmentleervolumens.

Aus der WO-A-90/06,399 ist bereits ein mattgestrichenes Druckpapier für den Einsatz im Offset- oder Tiefdruck bekannt, das mit einem unverkleisterte Stärke enthaltenden Streichmittel oberflächen-behandelt ist.

Diese Anmeldung beschränkt sich ausdrücklich auf Druckpapiere und gibt keine Hinweise auf die spezielle Aufgabenstellung von Ink-Jet-Papieren. Bei den mit Stärke oberflächen-behandelten Papieren nach dem Stand der Technik ist keine kationische Modifizierung vorgesehen. Es werden unterschiedlichste Stärken beschrieben mit Teilchengrößen von vorzugsweise 7 bis 50 µm.

Aus der WO-A-98/31,740 ist eine mit wenigstens einem kationischen Polymer modifizierte Stärke bekannt. Nach dem beschriebenen Verfahren wird eine trockene und rieselfähige Stärke so mit einem kationischen Polymeren kombiniert, dass die Stärkepartikel nicht verkleben. Die modifizierten Stärken werden in fester Form erhalten, vor ihrem Einsatz in Wasser aufgeschlämmt und durch Anwendung von Druck und erhöhten Temperaturen aufgeschlossen. Dabei entstehen verkleisterte Stärken, die als Trocken- oder Nassverfestigungsmittel sowie als Entwässerungsund Retentionsmittel bei der Papierherstellung eingesetzt werden können. Ein Einsatz als Streichfarbe zur Veredelung von Papieroberflächen ist nicht erwähnt. Die verkleisterten vorbe-kannten Zusammensetzungen kommen schon aufgrund ihrer hohen Viskosität für diesen Zweck auch nicht in Frage.

Aufgabe der vorliegenden Erfindung ist es, eine Streichmasse zur Oberflächenbehandlung oder einen Dispersionsbinder zur Herstellung von Papieren zur Verfügung zu stellen, die sich zum Ink-Jet- oder Laserdruck-Verfahren einsetzen lassen und die zur Drucken mit hoher Farbdichte führen.

Eine weitere Aufgabe der Erfindung ist die Bereitstellung eines Verfahrens zur Ausrüstung von Papieren für den Ink-Jet- oder das Laserdruck-Verfahren.

Eine weitere Aufgabe der Erfindung besteht in der Bereitstellung einer ausgewählten oberflächenmodifizierte Stärke.

Überraschenderweise wurde nun gefunden, dass eine wässrige Suspension einer kationisch oberflächen-modifizierten, feinteiligen und unverkleisterten Stärke mit einem mittleren Korndurchmesser von 5 bis 50 µm, vorzugsweise von 5 bis 30 µm, sowohl als Dispersionsbinder in Formulierungen für hochwertige Papiere, insbesondere Ink-Jet-Papiere, als auch für die Oberflächenbehandlung von solchen Papieren eingesetzt werden kann.

Als Stärke lassen sich beliebige sehr feinteilige Typen einsetzen, sofern der mittlere Korndurchmesser D₅₀ der Stärkekörnchen 5 bis 50 µm, vorzugsweise 5 bis 30 µm, beträgt. Beispiele für Stärken sind Mais-, Kartoffel-, Roggen-, Reis-, Tapioka- oder insbesondere Weizenstärke.

Die erfindungsgemäß oberflächen-modifizierten Stärken können durch Veretherung, Veresterung oder sonstige chemische Behandlung modifiziert worden sein. Bevorzugt werden native Stärken eingesetzt, also chemisch nicht modifizierte Stärken.

Feinteilige Typen von Stärken sind kommerziell erhältlich oder können nach an sich bekannten Verfahren, beispielsweise durch Sieben, erhalten werden.

Bevorzugt werden Stärken, insbesondere Weizenstärken, mit einem mittleren Korndurchmesser von 5 bis 15 µm, eingesetzt.

Die Oberfläche der unverkleisterten und suspendierten Stärke wird erfindungsgemäß kationisch oberflächenmodifiziert.

Dazu werden chemische Verbindungen, die der Oberfläche der Stärketeilchen eine kationische Ladung verleihen, an die Oberfläche der Stärketeilchen gebunden. Dieses kann sowohl adsorptiv als auch durch Ausbildung chemischer (kovalenter) Bindungen erfolgen.

Dadurch wird die Oberfläche der Stärke so modifiziert, dass die kationische Ladung an der Oberfläche der Stärke fixiert bleibt und dass sich anionische Gegenionen in der die Stärke umgebenden Lösung befinden.

Bevorzugt wird die Stärke durch Pfropfen mit Monomeren modifiziert, die kationische Gruppen enthalten oder auszubilden vermögen.

Beispiele für erfindungsgemäße oberflächen-modifizierte Stärken sind feinteilige Stärken, die mit Amiden ethylenisch ungesättigter Carbonsäuren, wie mit Acrylsäureamiden und/oder Methacrylsäureamiden, oder mit Aminoalkylestern ethylenisch ungesättigter Carbonsäuren, wie mit Acrylsäureaminoalkylestern und/oder Methacrylsäureaminoalkylestern, oder mit Aminen enthaltend ethylenisch ungesättigte Kohlenwasserstoffreste, oder mit Carbonsäureamiden abgeleitet von gesättigten Carbonsäuren und Aminen enthaltend ethylenisch ungesättigte Reste, wie N-Vinylamide, beispielsweise N-Vinylacetamid, oder mit Gemischen dieser Monomeren gepfropft worden sind.

Die erfindungsgemäßen, oberflächen-modifizierten, feinteiligen Stärken können Aminogruppen aufweisen; dabei kann es sich um primäre, sekundäre, tertiäre oder quaternäre Aminogruppen handeln.

Weitere Beispiele für bevorzugte erfindungsgemäße oberflächen-modifizierte Stärken sind feinteilige Stärken, die mit Lactamen enthaltend ethylenisch ungesättigte Gruppen, wie N-Vinylcaprolactam oder N-Vinylpyrrolidon oder mit Gemischen dieser Monomeren gepfropft worden sind.

Weitere Beispiele für bevorzugte erfindungsgemäße oberflächen-modifizierte Stärken sind feinteilige Stärken, die mit Aminen bzw. quaternären Ammoniumsalzen, enthaltend ethylenisch ungesättigte Gruppen, wie Allyl-trialkylammonium-chloride, Di-allyl-dialkyl-ammonium-chloride oder Allyl-dialkylamine oder mit Gemischen dieser Verbindungen modifiziert worden sind.

Ganz besonders bevorzuge oberflächen-modifizierte Stärken sind mit amidgruppenhaltigen und/oder aminogruppenhaltigen ethylenisch ungesättigen Monomeren gepfropfte feinteilige Stärken. Dabei beträgt das Gewichtsverhältnis von amidgruppenhaltigem ethylenisch ungesättigem Monomeren zur Stärke bis zu 1 : 1, vorzugsweise 0,1-1 :1.

Die Pfropf- bzw. Modifizierungsreaktion wird im allgemeinen in wässriger Phase und unter Verwendung an sich bekannter Initiatoren durchgeführt, beispielsweise mit Ammoniumpersulfat.

Bevorzugt wird die Stärke durch kovalente Verknüpfung mit kationischen Monomeren, wie Aminoalkyl-Acrylaten oder -Methacrylaten oder auch durch Aminoalkvl-Acryl-Amiden oder - Methacryl-Amiden, ebenso bevorzugt auch durch Diallyl-Dialkyl-Ammoniumchloride modifiziert.

Besonders bevorzugt werden N,N-Dimethyl-Aminoethyl-Methacrylat-Acetat und/oder N,N,N-Trimethyl-Ammoniummethyl-Methacrylat-chlorid eingesetzt.

In einer weiteren bevorzugten Ausführungsform wird die erfindungsgemäß einzusetzende Stärke durch Adsorption von geladenen Verbindungen modifiziert, die der Oberfläche der Stärketeilchen umhüllen und diesen eine kationische Oberflächenladung verleihen.

Dabei handelt es sich um Pfropfpolymere, die sich von Proteinen ableiten und mit ethylenisch ungesättigten Monomeren, die Amid- und/oder Aminogruppen enthalten, gepfropft worden sind. Derartige Polymere sind starke Lewis-Basen (ElektronenDonatoren) und besitzen eine ausgeprägte Tendenz zum Anhaften an die Stärketeilchen. Es wurde gefunden, dass diese Pfropfpolymeren die Stärketeilchen umhüllen und eine Stabilisierung der Stärkedispersion bewirken.

Beispiele für erfindungsgemäß einsetzbare Polymere sind Proteine, wie Sojaprotein, Kasein und bevorzugt Gelatine, die mit Amiden ethylenisch ungesättigter Carbonsäuren, wie mit Acrylsäureamiden und/oder Methacrylsäureamiden, oder mit Aminoalkylestern ethylenisch ungesättigter Carbonsäuren, wie mit Acrylsäureaminoalkylestern und/oder Methacrylsäureaminoalkylestern, oder mit Aminen enthaltend ethylenisch ungesättigte Kohlenwasserstoffreste, oder mit Carbonsäureamiden abgeleitet von gesättigten Carbonsäuren und Aminen enthaltend ethylenisch ungesättigte Reste, wie N-Vinylamide, beispielsweise N-Vinylacetamid, oder mit Gemischen dieser Monomeren gepfropft worden sind.

Die erfindungsgemäß einsetzbaren Polymeren können Aminogruppen aufweisen; dabei kann es sich um primäre, sekundäre oder tertiäre Aminogruppen handeln.

Weitere Beispiele für erfindungsgemäß einsetzbare Polymere sind Proteine, wie Sojaprotein, Kasein und bevorzugt Gelatine, die mit Lactamen enthaltend ethylenisch ungesättigte Gruppen, wie N-Vinylcaprolactam oder N-Vinylpyrrolidon oder mit Gemischen dieser Monomeren gepfropft worden sind.

Bevorzuge Komponenten für die erfindungsgemäß modifizierten Stärken sind mit amidgruppenhaltigen und/oder aminogruppenhaltigen ethylenisch ungesättigen Monomeren gepfropfte Gelatinen. Dabei beträgt das Gewichtsverhältnis von amidgruppenhaltigem ethylenisch ungesättigem Monomeren zu Gelatine bis zu 1 : 1, vorzugsweise 0,1-1 :1.

Pfropfpolymere, die sich von Proteinen ableiten und mit ethylenisch ungesättigten und Amid- und/oder Aminogruppen enthaltenden Monomeren gepfropft wurden, sind bekannt und in der DE-A-10037845 beschrieben.

Besonders bevorzugt wird die Stärke durch ein Gelatine-N-Vinyllactampfropfpolymerisat modifiziert oder durch Copolymere des Polyvinyllactams.

Ebenso bevorzugt wird die Stärke durch anorganische, kationische Nanopartikel, vorzugsweise durch eine kationische Nanokieselsäure, modifiziert. Unter Nanopartikeln sind im Rahmen dieser Beschreibung Partikel mit Teilchendurchmessern von weniger als 100 nm zu verstehen. Beispiele für anorganische Materialien, die Nanopartikel ausbilden können, sind Kieselsäuren oder Aluminiumoxid.

Bevorzugt wird eine kationische Nanokieselsäure mit einem Teilchendurchmesser von 5 bis 45 nm, besonders bevorzugt von 10 bis 20 nm.

Die beschriebenen oberflächen-modifizierten Stärken sind neu und ebenfalls ein Gegenstand der vorliegenden Erfindung.

Das so erhaltene Stärkeslurry lässt sich zur Herstellung von Streichmassen zur Oberflächenbehandlung von Papieren oder als Dispersionsbinder für die Herstellung von Papieren einsetzen.

Die Erfindung betrifft auch eine Streichmasse für die Oberflächenbehandlung von Papieren enthaltend die oben beschriebene wässrige Suspension, sowie übliche Hilfs- und Zuschlagstoffe.

Beispiele für Hilfs- bzw. Zuschlagstoffe sind Bindemittel, wie Styrol-Butadien Dispersionen oder Styrol-Acrylat Dispersionen, optische Aufheller, wie 4,4'-Diaminostilben-disulfonsäurederivate, Konservierungsmittel, Dispergiermittel, wie Natrium-polyacrylate, Gleitmittel, wie langkettige Natrium-, Ammonium- oder Calciumcarboxylate, z.B. Stearate, Entschäumer, Entlüfter oder pH-Regulatoren, wie Natronlauge oder Ammoniak, sowie Vernetzer bzw. Härtungsmittel für das Bindemittel, wie Melamin-Formaldehyd-Harze, Harnstoff-Formaldehyd-Harze, Glyoxal bzw. Glyoxalderivate oder Polyglycidether.

In einer bevorzugten Ausführungsform enthält die Zuammensetzung Polyvinylalkohol in einem Anteil von 5 - 15 Gew. %, vorzugsweise etwa 10 Gew. %.

Der Anteil der oberflächen-modifizierten Stärke in der erfindungsgemäßen Zusammensetzung beträgt üblicherweise 10 bis 50 Gew. %, vorzugsweise 20 bis 40 Gew.%.

Die erfindungsgemässe Zusammensetzung hat beim Auftrag auf ein Papier eine Viskosität von 500 bis 2000 mPa*sec, vorzugsweise 1500 bis 2000 mPa*sec (gemessen bei 20°C mit dem Brookfield-Viskosimeter, Spindel Nr. #4, 100 Umdrehungen pro Minute).

Die Verkleisterungstemperatur der oberflächen-modifizierten Stärke von etwa 70°C wird erst beim Trocknungsvorgang überschritten und führt durch diese Verkleisterung zur gewünschten Fixierung der kationischen Oberflächenladung, beispielsweise vermittelt durch die Kieselsäurepartikel, an der Papieroberfläche.

Die erfindungsgemäß beschichteten oder gebundenen Papiere weisen Oberflächen auf, die teilverkleisterte kationische, oberflächen-modifizierte, feinteilige Stärke, bevorzugt Weizenstärke mit einem Korndurchmesser von 5 bis 30 µm, bevorzugt von 5 bis 15 µm enthalten.

Von der beim Ink-Jet-Druckverfahren aufgetragenen Lösung aus anionischen Farbpigmenten und/oder anorganischen Farbstoffen und Lösungsmittel werden die Farbpigmente und/oder Farbstoffe an der kationischen Oberfläche verankert, das Lösungsmittel dringt in das Papiervolumen ein. Diese Filterwirkung führt zur gewünschten Farbdichte und Schärfe des Druckbildes.

Die Erfindung betrifft auch die Verwendung der oben beschriebenen Zusammensetzung zur Herstellung von Papieren, die mit anionischen Farbpigmenten und/oder mit anorganischen gelösten Farbstoffen bedruckt werden, insbesondere von Ink-Jet-Papieren oder von Papieren für den Laserdruck, sowie die durch Behandlung mit der beschriebenen Zusammensetzung erhältlichen Papiere.

Die Erfindung soll anhand der nachfolgende Beispiele erläutert werden, ohne die Ansprüche auf diese Beispiele zu beschränken. Prozentangaben beziehen sich auf die Masse der Gesamtzusammensetzung, sofern nichts anderes angegeben ist.

### Beispiel 1: Verfahren zur Kationisierung einer Stärke

In einen Mehrhalskolben wurden 100 Teile otro (= ofentrocken) Latitek SP Stärkepulver in 150 Teile demineralisiertem Wasser aufgeschlämmt. Der Dispersion wurden 25 Teile N,N-Dimethylaminoethylmethacrylat-acetat zugesetzt und die Mischung auf ca. 50°C erwärmt. 0,1 Teile Ammoniumpersulfat gelöst in 2 Teilen Wasser wurden in die Mischung während 60 min zugetropft. Die Mischung wurde anschließend weitere 6 Stunden bei einer Temperatur von 50°C gerührt.

Es wurde ein 50%-iger viskoser, kationischer Stärkeslurry mit einer Viskosität von ca. 1500 bis 2000 mPa*s erhalten. Um Verkleisterung mit extremer Viskositätszunahme zu verhindern, war die Polymerisation unterhalb der Verkleisterungstemperatur der eingesetzten Stärke durchzuführen. In diesem Fall bei Temperaturen unterhalb von ca. 55°C. Die Verkleisterungstemperatur der eingesetzten Stärketype lag bei ca. 70°C.

### Beispiel 2: Verfahren zur Kationisierung einer Stärke

100 Teile Latitek SP wurden in 150 ml demin. H₂O aufgeschlämmt und 5 Teile eines Gelatine-N-Vinyllactampfropfpolymerisats zugesetzt.

Das Propfpolymerisat adsorbierte an der Oberfläche der Stärkekörner. Anschließend wurden 15 Teile otro eines 50%-igen Dimethylaminoepichlorhydrinkondensates mit einer Viskosität von 500 bis 700 mPa*s zugesetzt. Zur weiteren Verdickung wurden 5 Teile otro Polyvinylalkohol 5-88 als 25%ige Lösung zugesetzt. Es wurde eine 46%ige kationische Stärkedispersion erhalten.

### Beispiel 3: Modifizierung einer Stärke durch Nanokieselsäure

Es wurden 100 Teile Latitek SP in 100 Teile demineralisiertem Wasser aufgeschlämmt. Anschließend wurden 10 Teile otro einer 30%-igen kationischen Nanokieselsäure mit 15 nm Teilchendurchmesser zugesetzt. Die Nanokieselsäure enthielt Aluminiumionen an der Oberfläche.

Zwischen der kationischen Nanokieselsäure und der Stärkeoberfläche bildete sich ein Komplex der zur Umhüllung der Stärkekörner mit kationischer Nanokieselsäurepartikel führte. Die kationische Ladung blieb irreversibel auf der Oberfläche der Stärkekörner fixiert.

### Beispiel 4: Formulierung für hochwertige Ink-Jet-Papiere

20 Teile des Produktes gemäß Beispiel 2 wurden einer 25%-igen Dispersion von Gelkieselsäure, z.B. Syloid 621 (Grace Chemicals), zugesetzt. Es wurde eine Formulierung mit 27,5% Festkörpergehalt erhalten, die ohne weitere Zusätze mit einem Auftragsgewicht von 12 bis 14 g/m² auf ein geeignetes Rohpapier aufgetragen wurde. Während der Trocknung kam es zu einem teilweisen Anquellen der Stärkepartikel, wodurch eine sehr effektive Abbindung der Kieselsäurepartikel erreicht wurde.

### Beispiel 5: Formulierung für Bürokopierpapiere

Hier wurden 100 Teile eines sehr feinen calcinierten Kaolins mit sehr hoher Oberfläche (Astrajet, Firma Imerys) 30 Teile des Produkts entsprechend Beispiel 1 zugesetzt. Es wurde eine 30%ige Formulierung erhalten, die mit einer Filmpresse auf ein holzfreies Rohpapier aufgetragen wurde. Das Auftragsgewicht lag zwischen 2 bis 5 g/m², sollte jedoch nicht höher liegen, da es sonst zu fleckigem Druckabfall kam.

### Beispiel 6: Formulierung für Bürokopierpapiere

100 Teile eines groben calcinierten Kaolins wurden mit 100 Teilen Stärkedispersion entsprechend Beispiel 3 gemischt. Man enthielt eine ca. 35%ige Formulierung, die mit einer Filmpresse auf ein holzfreies Rohpapier aufgetragen und getrocknet wurde. Das Auftragsgewicht betrug 1,5 bis 3 g/m².

### Beispiel 7: Bevorzugte Ausführungsform für Bürokopierpapiere mit einem Zusatz von Polyvinylalkohol (= PVOH)

Es wurden 60 Teile Latitek SP in 183,6 Teilen Wasser aufgeschlämmt. Anschließend wurden 10 Teile PVOH 26-88 als 15%-ige Lösung unter Rühren zugegeben. Dann wurden 0,2 Teile Ammoniumpersulfat als 1 %-ige Lösung eingemischt. Die Mischung wurde auf 45°C erwärmt und 30 Teile N,N,N-Trimethylethylammonium-methacrylatchlorid wurden zusammen mit 0,2 Teilen einer 1 %-igen Natriumdithionitlösung während 60 Minuten unter Rühren eingetropft. Die Mischung ließ man nach Beendigung des Eintropfens weiter 4 Stunden bei 45°C polymerisieren. Es wurde eine viskose 25%-ige Dispersion mit einer Brookfield-Viskosität bei 100 Upm von etwa 2000 mPa.s erhalten, die in dieser Form dann direkt für die Herstellung verbesserter Ink-Jet-Papiere eingesetzt werden konnte. Der Auftrag mittels Leimpresse oder bevorzugt mittels Filmpresse wurde zwischen 1 und 3 g/m² gewählt.

Beispiele 5, 6 und 7 führten zu Bürokopierpapieren, die sich bei vergleichsweise geringem Mehraufwand für den Ink-Jet-Druck eigneten und z.B. auf dem Hewlett-Packard-Drucker HP 850 C zu Farbendrucken führten, die eine hohe Farbdichte aufweisen und gleichzeitig ein hohes Auflösevermögen, was sich besonders bei der Wiedergabe von Fotos bemerkbar machte.

### Beispiel 8: Streichmittel zur Herstellung handelsüblicher Bürokopierpapiere (Vergleich)

80 Teile einer enzymatisch abgebauten Mais- und Kartoffelstärke wurden mit 20 Teilen von Basoplast 400 DS der BASF AG zur Teilhydrophobierung der Oberfläche zu einer 6 bis 8%-igen Flotte vermischt und mittels Leimpresse auf das Papier aufgebracht, oder aber auch als 10 bis 12%-ige Flotte mittels Filmpresse. Der Auftrag auf dem Papier lag dann etwa bei 1 bis 3 g/m².

Diese preiswerten Bürokopierpapiere eigneten sich für Ink-Jet und auch für Laser-Drucker im Rahmen der Wiedergabe von Schriftbildern und einfachen Grafiken. Eine Darstellung von Bildern und speziell von Fotos war aufgrund der geringen Farbdichte nicht zufriedenstellend, auch wenn durch die Teilhydrophobierung eine Verbesserung der Trennschärfe erzielt wurde.

### Beispiel 9: Streichmasse für spezielle hochwertige Fotopapiere nach dem Stand der Technik enthaltend die bisher üblichen aufwendigen Formulierungen

| | |
|---|---|
| Kieselsäure Syloid 6211¹⁾ | 100 Teile |
| PVOH R 1130²⁾ | 2 Teile |
| Polystat VP-K3³⁾ | 15 Teile |
| Poly-DADMAC⁴⁾ | 8 Teile |
| Festkörpergehalt | 25 % |

| | |
|---|---|
| ¹⁾ Grace | |
| ²⁾ silanierter Polyvinylalkohol von Kuraray | |
| ³⁾ kationisches Bindemittel von CTP GmbH&Co.KG | |
| ⁴⁾ Catiofast CS BASF | |

Die Handhabung der Kieselsäure erfolgte überwiegend unter Vakuum und war somit sehr aufwendig. Auch der notwendige hohe Auftrag von etwa 13 bis 15 g/m² führte zu hohen Kosten, die den Einsatz dieser Papiere entsprechend auf Spezialgebiete höchster Qualitätsansprüche beschränkten.

## Patentansprüche

1. Wässrige Suspension einer kationisch oberflächen-modifizierten, feinteiligen und unverkleisterten Stärke, die einen mittleren Korndurchmesser von 5 bis 50 µm aufweist.

2. Wässrige Suspension nach Anspruch 1, **dadurch gekennzeichnet, dass** sich die Stärke von nativer Mais-, Kartoffel-, Roggen-, Reis-, Tapioka- oder insbesondere von Weizenstärke ableitet, die einen mittleren Korndurchmesser von 5 bis 15 µm aufweist.

3. Wässrige Suspension nach Anspruch 1, **dadurch gekennzeichnet, dass** die Stärke durch Pfropfen mit Monomeren modifiziert wurde, die kationische Gruppen enthalten oder kationische Gruppen auszubilden vermögen.

4. Wässrige Suspension nach Anspruch 3, **dadurch gekennzeichnet, dass** die Monomeren ausgewählt werden aus der Gruppe bestehend aus Amiden ethylenisch ungesättigter Carbonsäuren, Aminoalkylestern ethylenisch ungesättigter Carbonsäuren, Aminen enthaltend ethylenisch ungesättigte Kohlenwasserstoffreste, Carbonsäureamiden abgeleitet von gesättigten Carbonsäuren und Aminen enthaltend ethylenisch ungesättigte Reste, oder Gemischen dieser Monomeren.

5. Wässrige Suspension nach Anspruch 4, **dadurch gekennzeichnet, dass** die Monomeren Lactame enthaltend ethylenisch ungesättigte Gruppen, insbesondere N-Vinylcaprolactam oder N-Vinylpyrrolidon, bedeuten.

6. Wässrige Suspension nach Anspruch 1, **dadurch gekennzeichnet, dass** die Stärke durch Adsorption von geladenen Verbindungen modifiziert ist, welche die Oberfläche der Stärketeilchen umhüllen und diesen eine kationische Oberflächenladung verleihen, wobei die geladenen Verbindungen Pfropfpolymere sind, die sich von Proteinen ableiten und mit ethylenisch ungesättigten Monomeren, die Amid- und/oder Aminogruppen enthalten, gepfropft worden sind.

7. Wässrige Suspension nach Anspruch 6, **dadurch gekennzeichnet, dass** die Pfropfpolymeren Proteine sind, bevorzugt Gelatine, die mit Amiden ethylenisch ungesättigter Carbonsäuren, mit Aminoalkylestern ethylenisch ungesättigter Carbonsäuren, mit Aminen enthaltend ethylenisch ungesättigte Kohlenwasserstoffreste, mit Carbonsäureamiden abgeleitet von gesättigten Carbonsäuren und Aminen enthaltend ethylenisch ungesättigte Reste oder mit Gemischen dieser Monomeren gepfropft worden sind.

8. Wässrige Suspension nach Anspruch 7, **dadurch gekennzeichnet, dass** die Pfropfpolymeren Proteine sind, bevorzugt Gelatine, die mit Lactamen enthaltend ethylenisch ungesättigte Gruppen, insbesondere mit N-Vinylcaprolactam, N-Vinylpyrrolidon oder mit Gemischen dieser Monomeren gepfropft worden sind.

9. Wässrige Suspension nach Anspruch 1, **dadurch gekennzeichnet, dass** die Stärke durch Adsorption einer kationischen Nanokieselsäure mit einem Teilchendurchmesser von 5 bis 45 nm modifiziert wurde.

10. Streichmasse zur Oberflächenbehandlung von Papieren enthaltend die wässrige Suspension nach Anspruch 1, sowie übliche Hilfs- und Zuschlagstoffe.

11. Streichmasse nach Anspruch 10, **dadurch gekennzeichnet, dass** diese Polyvinylalkohol in einem Anteil von 5 - 15 Gew. %, vorzugsweise etwa 10 Gew. %, enthält.

12. Streichmasse nach Anspruch 10, **dadurch gekennzeichnet, dass** deren Anteil an oberflächen-modifizierter Stärke 10 bis 50 Gew. %, vorzugsweise 20 bis 40 Gew.%, beträgt.

13. Streichmasse nach Anspruch 10, **dadurch gekennzeichnet, dass** deren Viskosität 500 bis 2000 mPa*sec (gemessen bei 20°C mit dem Brookfield-Viskosimeter, Spindel Nr. #4, 100 Umdrehungen pro Minute) beträgt.

14. Verwendung der wässrigen Suspension nach Anspruch 1 zur Oberflächenbehandlung von Papieren, die mit anionischen Farbpigmenten und/oder mit anionischen gelösten Farbstoffen bedruckt werden, insbesondere zur Herstellung von Ink-Jet-Papieren oder von Papieren für den Laserdruck.

15. Papier erhältlich durch Behandlung mit einer Streichmasse nach Anspruch 10.
